(19) Europäisches Patentamt
European Patent Office
Office européen des brevets

(11) Veröffentlichungsnummer: **0 038 792**
**B1**

(12) # EUROPÄISCHE PATENTSCHRIFT

(45) Veröffentlichungstag der Patentschrift: **12.10.83**

(51) Int. Cl.[3]: **A 23 L 3/34**, A 23 K 3/00, A 21 D 15/00, C 08 L 39/06

(21) Anmeldenummer: **81890057.3**

(22) Anmeldetag: **01.04.81**

(54) **Mykotoxinbindendes Gemisch.**

(30) Priorität: **23.04.80 AT 2183/80**

(43) Veröffentlichungstag der Anmeldung: **28.10.81 Patentblatt 81/43**

(45) Bekanntmachung des Hinweises auf die Patenterteilung: **12.10.83 Patentblatt 83/41**

(84) Benannte Vertragsstaaten: **AT BE CH DE FR GB IT LI NL**

(56) Entgegenhaltungen:
**DE-A-2 318 446**
**DE-A-2- 443 530**
**US-A-2 938 017**

**Römpps Chemie Lexikon (1979) Seiten 73, 85 und 1023**
**Winnacker/Küchler, Chemische Technologie II, Band 2 (1970), Seite 540**

(73) Patentinhaber: **Sagmeister, Franz, Dr., Hauslabgasse 8-10/11, Wien 5 (AT)**

(72) Erfinder: **Sagmeister, Franz, Dr., Hauslabgasse 8-10/11, Wien 5 (AT)**

(74) Vertreter: **Beer, Otto, Dipl.-Ing. et al, Lindengasse 8, A-1071 Wien (AT)**

**EP 0 038 792 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Mykotoxinbindendes Gemisch

Die Erfindung betrifft ein mykotoxinbindendes Gemisch.

Es besteht ein Bedürfnis an einem Mittel, durch das pilzbefallene Lebens- und/oder Futtermittel, die wegen der von Pilzen, insbesondere von Keimpilzen, als Stoffwechselprodukte ausgeschiedenen giftigen Toxine an sich ungeniessbar sind, wieder für Mensch bzw. Tier geniessbar gemacht werden können. Zu den stärksten befallenen Lebensmitteln zählen die Getreideerzeugnisse, wie insbesondere Brot, aber auch Reis, Malz, Fruchtsäfte usw.

Mykotoxin-Produzenten sind vor allem Aspergillus- (Schimmel), Claviceps- (Mutterkorn), Penicillium- und Rhizopus-Arten. Bekannte Mykotoxine sind Aflatoxine, Citrinin, Byssochlamsäure, Patulin u.a.

Der Erfindung liegt die Aufgabe zugrunde, ein Gemisch anzugeben, durch dessen Anwendung Mykotoxine enthaltende Lebens- und/oder Futtermittel für Mensch bzw. Tier wieder ohne Schaden geniessbar werden und das keine Nebenwirkungen im Organismus besitzt.

Diese Aufgabe wird mit der Erfindung dadurch gelöst, dass das Gemisch neben einer anorganischen Substanz mit grosser innerer Oberfläche ein kreuzvernetztes Homopolymer des N-Vinyl-2-pyrrolidon enthält.

Als anorganische Substanz (Absorbens) hat sich unter anderem Kieselgur besonders bewährt. In der Regel wird das Gemisch über 50 Gew.-%, vorzugsweise von 70–90 Gew.-%, des Homopolymeren enthalten. Besonders bewährt hat sich ein Gemisch aus 20 Gew.-% Kieselgur und 80 Gew.-% kreuzvernetztem Homopolymer des N-Vinyl-2-pyrrolidon.

Das erfindungsgemässe Gemisch wird normalerweise dem mykotoxinhaltigen Lebens- oder Futtermittel vor dessen Verzehr zugemischt. Es ist aber auch möglich, das Gemisch vor oder bevorzugt nach dem Verzehr von Toxine enthaltenden Lebens- oder Futtermitteln zu verabreichen. In jedem Anwendungsfall entwickelt das erfindungsgemässe Gemisch weder ausserhalb noch innerhalb des Organismus (Mensch oder Tier) eine andere als die gewünschte mykotoxinbindende Wirkung.

Das kreuzvernetzte Homopolymer von N-Vinyl-2-pyrrolidon kann z.B. nach dem in der US-PS 2 938 017 beschriebenen Verfahren hergestellt werden:

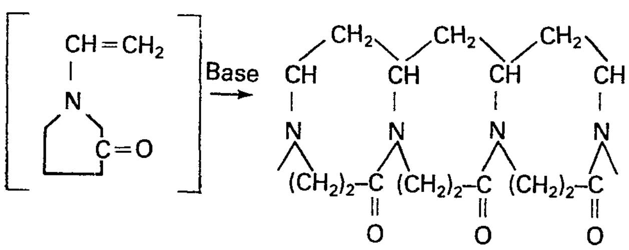


Das kreuzvernetzte Homopolymer von N-Vinyl-2-pyrrolidon (Polyvinylpolypyrrolidon = PVPP) ist als Desintegrationsmittel für feste Arzneiformen («Tablettensprengmittel») vorgeschlagen worden (vgl. A.H. Bronnsack, Pharm. Ind. 38, 12, 1181–1185 /1976/).

PVPP ist ein chemisch und biologisch inertes, in Wasser, Laugen, Säuren und den üblichen organischen Lösungsmitteln unlösliches Pulver, das sowohl bei externer Anwendung als auch bei peroraler Verabreichung nicht toxisch ist (vgl. den vorzitierten Aufsatz von A.H. Bronnsack).

Die Herstellung des Gemisches ist problemlos. Es genügt, die Komponenten im gewünschten Mischungsverhältnis von Hand oder maschinell abzumischen.

Die Wirkung des erfindungsgemässen Gemisches, die auch hinsichtlich ihres Ausmasses ausserordentlich ist, überrascht, da weder Kieselgur (vgl. Postel W. und Görg A.: BRAUWISSENSCHAFT 29: 193 (1976), Postel W. und Görg A. BRAUWISSENSCHAFT 30: 312 (1977), Postel W. und Görg A.: BRAUWISSENSCHAFT 32: 40 (1979); Müller H.-M. in J. Reiss (ed) MYKOTOXINE IN LEBENSMITTELN, S. 461, G. Fischer Stuttgart, New York 1981 und Halama A:K. (vet. Univ. Wien): Wien. tierärztl. Mschr., im Druck (1982)) noch PVPP für sich alleine genommen diese oder auch nur eine ähnliche Wirkung zeigen.

Beispielsweise kann das erfindungsgemässe Gemisch wie folgt zusammengesetzt sein:

a) 80 Gew.-% PVPP als rieselfähiges Pulver mit folgenden Eigenschaften:

| | |
|---|---|
| Farbe: | praktisch weiss |
| Geschmack: | praktisch geschmacklos |
| Dichte (Luft-Beckmann-Methode): | 1.22 $g/cm^3$ (Mittelwert) |
| Wassergehalt (Karl Fischer): | max. 5% |
| Aschegehalt: | max. 0,4% |
| Stickstoffgehalt (Dumas): | 12% ± 1% |
| Schwermetallionen: | max. 10 ppm |
| Arsen: | max. 1 ppm |
| Molekulargewicht: | >1.000.000 |
| Spezifische Oberfläche: | $O_M = 1.0–1.5\ m^2/g$ |
| (Ströhlein AERA-Meter/ BET-Methode) | $O_V = 1.2–1.8\ m^2/cm^3$ |

Wassersorption
(aus flüssiger Phase):
(mod. Enslin-Methode)

| | |
|---|---|
| a) nach 15 sec. | 4.1–4.5 ml/s |
| b) nach 15 min. | 4.1–4.5 ml/s |

und

b) 20 Gew.-% Kieselgur (Diatomeenerde) mit folgenden Eigenschaften:

Aussen: weisses bis hellgraues, feines Pulver
Litergewicht: 150–300 g
Gehalt: 70–90% amorphe Kieselsäure
$H_2O$: 3–12%
Korngrösse: 10–40 μ

Die absorbierende Wirkung der erfindungsgemässen Mischung bei Mykotoxinen unterschiedlicher chemischer Struktur wie den Aflatoxinen $B_1$, $B_2$, $G_1$ und $G_2$, Zearalenon und Patulin wurde in vitro festgestellt.

Für jeden Versuch wurden mehrere Ansätze in Kontroll- und Testansätzen untersucht.

Der Kontrollansatz beinhaltet in der Aflatoxingruppe jeweils 0.5 μg/ml Aflatoxin $B_1$, $B_2$, $G_1$ bzw. $G_2$, in der Zearalenongruppe 2 μg/ml Zearalenon und in der Patulingruppe 1 μg/ml Patulin in 50 ml Reis-Lösungsmittelmischung (3 g Reis mit dem toxinspezifischen Lösungsmittel auf 50 ml aufgefüllt).

Der Testansatz enthielt neben den oben genannten Mengen noch 125 mg der Testsubstanzmischung.

Die Versuche zeigen, dass diese erfindungsgemässe Mischung in vitro eine mykotoxinabsorbierende Wirkung aufweist. Sie ist befähigt, in einem die Verhältnisse des Verdauungstraktes imitierenden Versuch Mykotoxine zu bilden. Chemisch unterschiedliche Toxine wie die Aflatoxine $B_1$, $B_2$, $G_1$ und $G_2$ sowie Zearalenon und Patulin zeigen in allen Probenansätzen einen auf 100%-ige Wiederauffindung bezogenen und somit als mittlere prozentuelle Reduktion bezeichneten Effekt. So beträgt die mittlere prozentuelle Reduktion durch die oben beschriebene Mischung (80 Gew.-% PVPP und 20 Gew.-% Kieselgur) bei Aflatoxin $B_1$ 60.96%, $B_2$ 37.43%, $G_1$ 45.04% und $G_2$ 34.76%, bei Zearalenon 12.85% und bei Patulin 23.85%. Der Unterschied zwischen Kontroll- und Testansatz ist für jedes Toxin statistisch gesichert. Die Adsorptionsfähigkeit ist von Toxin zu Toxin unterschiedlich, liegt bei den Aflatoxinen um das 66.12-($B_1$), 56.24-($B_2$), 52.33-($G_1$), 78.39-($G_2$) bei Zearalenon um das 4.47- und bei Patulin um das 14.84-fache über der Wirkung einer gewichtsgleichen, den Darminhalt darstellenden Menge Reismehl.

Neben Kieselgur können als anorganische Substanz z.B. noch folgende Stoffe verwendet werden:

Synthetische Kieselsäure:
Hochreine synth. Kieselsäure, $SiO_2$ (AEROSIL, Schutzmarke)
Aussehen: rein weisses, sehr feines lockeres Pulver
Stampfdichte: ca. 50 g/l
Schüttgewicht: 40–60 g/l
Teilchengrösse: 10–40 mμ
Trockenverlust: ca. 1,3%
Gehalt: ca. 99% Kieselsäure
BET-Oberfläche: 130–380 $m^2/g$

Synth. Kieselsäure $SiO_2$ (SIPERNAT, Schutzmarke)
Aussehen: rein weisses, lockeres Pulver
Stampfdichte: 80–200 g/l
Teilchengrösse: 5–80 mμ
Trockenverlust: 3–6%
Gehalt: 98–99% Kieselsäure
BET-Oberfläche: 110–190 $m^2/g$

BOLUS ALBA (Aluminiumsilikate wechselnder Zusammensetzung)
Aussehen: weisses, feines Pulver
Schüttgewicht: 400–600 g/l
Teilchengrösse: 10–20 μ
Trockenverlust: 0,7–1%
Glühverlust: 5–6%
Gehalt:
Aluminiumsilikate: min. 65%
Quarzanteile: ca. 25%

ALUMINIUMSILIKAT, Gefällt, $Al_2SiO_5$
Aussehen: weisses, feines, rieselfreudiges Pulver
Trockenverlust: max. 6%
Glühverlust: max. 7%
Stampfdichte: ca. 140 g/l
BET-Oberfläche: 100 $m^2/g$
Analyse:

| | |
|---|---|
| $SiO_2$: 82% | $Na_2O$: 8% |
| $Al_2O_3$: min. 9,6% | $Fe_2O_3$: 0,03% |

ALUMINIUMOXID, $Al_2O_3$
Aussehn: rein-weisses, rieselfreudiges Pulver
Trockenverlust: ca. 5%
Glühverlust: ca. 3%
Stampfdichte: ca. 60 g/l
BET-Oberfläche: 100 $m^2/g$
Gehalt:
$Al_2O_3$: ca. 97%

Als anorganische Substanzen kommen ausserdem noch in Frage: Magnesiumsilikate und Magnesiumoxid.

**Patentansprüche**

1. Mykotoxinbindendes Gemisch, dadurch gekennzeichnet, dass es neben einer anorganischen Substanz mit grosser innerer Oberfläche ein kreuzvernetztes Homopolymer des N-Vinyl-2-pyrrolidon enthält.

2. Gemisch nach Anspruch 1, dadurch gekennzeichnet, dass es mehr als 50 Gew.-% kreuzvernetztes Homopolymer des N-Vinyl-2-pyrrolidon enthält.

3. Gemisch nach Anspruch 1 oder 2, dadurch gekennzeichnet, dass es 70 bis 90 Gew.-% kreuzvernetztes Homopolymer des N-Vinyl-2-pyrrolidon enthält.

4. Gemisch nach einem der Ansprüche 1 bis 3,

dadurch gekennzeichnet, dass es als anorganische Substanz Kieselgur enthält.

5. Gemisch nach Anspruch 2, dadurch gekennzeichnet, dass es 20 Gew.-% anorganische Substanz, insbesondere Kieselgur, und 80 Gew.-% kreuzvernetztes Homopolymer des N-Vinyl-2-pyrrolidon enthält.

6. Gemisch nach einem der Ansprüche 1 und 3 bis 5, dadurch gekennzeichnet, dass es als anorganische Substanz synthetische Kieselsäure enthält.

7. Gemisch nach einem der Ansprüche 1 und 3 bis 5, dadurch gekennzeichnet, dass es als anorganische Substanz Silikate, wie Magnesiumsilikate oder Aluminiumsilikate, z.B. gefälltes Aluminiumsilikat ($Al_2SiO_5$) enthält.

8. Gemisch nach einem der Ansprüche 1 und 3 bis 5, dadurch gekennzeichnet, dass es als anorganische Substanz Aluminiumoxid enthält.

9. Gemisch nach einem der Ansprüche 1 und 3 bis 5, dadurch gekennzeichnet, dass es als anorganische Substanz Magnesiumoxid enthält.

**Revendications**

1. Mélange liant les mycotoxines, caractérisé en ce qu'il contient, outre une substance inorganique à grande surface intrinsèque, un homopolymère à réticulation croisée de la N-vinyl-2-pyrrolidone.

2. Mélange selon la revendication 1, caractérisé en ce qu'il contient plus de 50% en poids de l'homopolymère à réticulation croisée de la N-vinyl-2-pyrrolidone.

3. Mélange selon la revendication 1 ou 2, caractérisé en ce qu'il contient de 70 à 90% en poids de l'homopolymère à réticulation croisée de la N-vinyl-2-pyrrolidone.

4. Mélange selon l'une quelconque des revendications 1 à 3, caractérisé en ce qu'il contient comme substance inorganique du kieselguhr.

5. Mélange selon la revendication 2, caractérisé en ce qu'il contient 20% en poids de substance inorganique, en particulier de kieselguhr et 80% en poids de l'homopolymère à réticulation croisée de la N-vinyl-2-pyrrolidone.

6. Mélange selon l'une quelconque des revendications 1 et 3 à 5, caractérisé en ce qu'il contient, comme substance inorganique, de l'acide silicique synthétique.

7. Mélange selon l'une quelconque des revendications 1 et 3 à 5, caractérisé en ce qu'il contient comme substance inorganique du silicate tel que du silicate de magnésium ou du silicate d'aluminium, par exemple du silicate d'aluminium précipité ($Al_2SiO_5$).

8. Mélange selon l'une quelconque des revendications 1 et 3 à 5, caractérisé en ce qu'il contient comme substance inorganique de l'oxyde d'aluminium.

9. Mélange selon l'une quelconque des revendications 1 et 3 à 5, caractérisé en ce qu'il contient comme substance inorganique de l'oxyde de magnésium.

**Claims**

1. A mycotoxin-binding composition, characterized in that it comprises besides of an inorganic substance with large specific surface a crosslinked homopolymer of N-vinyl-2-pyrrolidone.

2. A composition according to claim 1, characterized in that it comprises said crosslinked homopolymer of N-vinyl-2-pyrrolidone in an amount of more than 50% by weight.

3. A composition according to claim 2, characterized in that it comprises said crosslinked homopolymer in an amount between 70 and 90% by weight.

4. A composition according to claim 1, characterized in that it comprises kieselguhr as said inorganic substance.

5. A composition according to claim 1, characterized in that it comprises said inorganic substance in particular kieselguhr in an amount of 20% by weight and said crosslinked homopolymer of N-vinyl-2-pyrrolidone in an amount of 80% by weight.

6. A composition according to one of claims 1 and 3 to 5, characterized in that it comprises synthetic silicic acid as said inorganic substance.

7. A composition according to one of claims 1 and 3 to 5, characterized in that it comprises as said inorganic substance silicates as magnesium silicates or aluminium silicates in particular precipitated aluminium silicate ($Al_2SiO_5$).

8. A composition according to one of claims 1 and 3 to 5, characterized in that it comprises as said inorganic substance aluminium oxide.

9. A composition according to one of claims 1 and 3 to 5, characterized in that it comprises as said inorganic substance magnesium oxide.